# EUROPEAN PATENT APPLICATION

(11) **EP 2 582 162 A1**
(43) Date of publication of application: **17.04.2013**
(21) Application number: 11791821.9
(22) Date of filing: 07.01.2011
(51) Int. Cl.: H04W 4/06

(54) **METHOD, TRANSMISSION CENTRE, BASE STATION AND SYSTEM FOR SENDING BROADCAST TELEVISION SIGNALS,**

(30) Priority: 12.06.2010 CN 201010203781
(71) Applicant: Zhou, Yingping, Xuchang, Henan 461000 (CN)
(72) Inventor: Zhou, Yingping, Xuchang, Henan 461000 (CN)
(74) Representative: Thibon, Laurent
(86) International application number: PCT/CN2011/070069
(87) International publication number: WO 2011/153829

(57) **Abstract**

A method, a transmission centre, a base station and a system for sending broadcast television signals can implement automatic operation and management for broadcast television emission. The method includes: the broadcast television transmission centre determines control information for controlling the work of each station, sends the corresponding control information to each station through a broadcast television networks, and instructs each base station to control its work according to the received control information.

## Description

This application claims the benefit of Chinese Patent Application No. 201010203781.6, filed with the Chinese Patent Office on June 12, 2010 and entitled "Radio and television signal transmitting method, transmitting center, base station and system", which is hereby incorporated by reference in its entirety.

### Field of the Invention

The present invention relates to the field of communications and particularly to a radio and television signal transmitting method, transmitting center, base station and system.

### Background of the Invention

For cellular synchronous networking of terrestrial wireless radio and television, synchronous coverage of transmission signals between cellular base stations is achieved typically in a manual debugging, operation and management approach where an engineer sets manually the sizes of delays and transmission powers for the transmission signals of the respective base stations according to arrival delays for the signals of the respective base stations, coordinate locations of the base stations and geographical environments between the adjacent base stations, but repeated debugging has to be performed for optimal synchronous coverage of the signals between the respective cellular base stations because setting of the parameters of the cellular base stations is a very complex process. Thus cellular networking coverage of broadcast and television in the prior art suffers from the problems of complex network engineering debugging, highly difficult operation and management, inefficient transmission coverage, etc.

### Summary of the Invention

The invention provides a radio and television signal transmitting method, transmitting center, base station and system which can perform automated operation and management of radio and television signal transmission.

A method for transmitting radio and television signals includes:
determining, by a radio and television transmitting center, control information to control each base station to operate; and
transmitting the corresponding control information to the respective base stations over a radio and television network to instruct the respective base stations to control the base stations to operate according to the received control information.

Particularly before the radio and television transmitting center generates control information to control each base station to operate, the method further includes:
receiving, by the radio and television transmitting center, status information transmitted over a mobile communication network from the respective base stations.

Particularly determining, by the radio and television transmitting center, control information to control each base station to operate includes: determining, by the radio and television transmitting center, the control information of each base station for transmission of the radio and television signal respectively according to the status information of the respective base stations; and
the transmitting the corresponding control information to the respective base stations over a radio and television network to instruct the respective base stations to control the base stations to operate according to the received control information includes:
transmitting the radio and television signals and the corresponding control information to the respective base stations over the radio and television network to instruct the respective base stations to control transmission of the radio and television signal according to the received control information.

A method for transmitting a radio and television signal includes:
receiving, by a base station, control information transmitted over a radio and television network from a radio and television transmitting center; and
controlling the base station to operate according to the received control information.

Furthermore the method further includes:
transmitting status information of the base station to the radio and television transmitting center over a mobile communication network.

Particularly receiving, by the base station, control information transmitted over a radio and television network from a radio and television transmitting center includes:
receiving, by the base station, a radio and television signal and the control information transmitted over the radio and television network from the radio and television transmitting center; and
the controlling the base station to operate according to the received control information includes:
   controlling transmission of the radio and television signal according to the received control information.

A radio and television transmitting center includes:
a computer unit configured to determine control information to control each base station to operate; and
a transmission unit configured to transmit the corresponding control information to the respective base stations over a radio and television network to instruct the respective base stations to control the base stations to operate according to the received control information.

Furthermore the radio and television transmitting center further includes:
a communication gateway configured to receive and transmit, to the computer unit, status information transmitted over a mobile communication network from the respective base stations.

Particularly the computer unit is configured to determine the control information of each base station for transmission of a radio and television signal respectively according to the status information of the respective base stations; and
the transmission unit is further configured to transmit the radio and television signals and the corresponding control information to the respective base stations over the radio and television network to instruct the respective base stations to control transmission of the radio and television signals according to the received control information.

A base station includes:
a reception unit configure to receive control information transmitted over a radio and television network from a radio and television transmitting center; and
a control unit configured to control the base station to operate according to the received control information.

Furthermore the base station further includes:
a computer unit configured to transmit status information of the base station to the radio and television transmitting center over a mobile communication network.

Particularly the reception unit is configured to receive a radio and television signal and the control information transmitted over the radio and television network from the radio and television transmitting center; and
the control unit is configured to control transmission of the radio and television signal according to the received control signal.

A system for transmitting radio and television signals includes a radio and television transmitting center and base stations, wherein:
the radio and television transmitting center is configured to determine control information to control each base station to operate and to transmit the corresponding control information to the respective base stations over a radio and television network to instruct the respective base stations to control the base stations to operate according to the received control information; and
the base stations are configured to receive the control information transmitted over the radio and television network from the radio and television transmitting center and to control the base stations to operate according to the received control information.

Particularly the radio and television transmitting center is further configured to receive status information transmitted over a mobile communication network from the respective base stations; and
the base stations are further configured to transmit the status information of the base stations to the radio and television transmitting center over the mobile communication network.

The embodiments of the invention provides a method for transmitting a radio and television signal, where a radio and television transmitting center can determine control information of respective base stations and transmit the control information to the respective base stations, and the base stations can control the base stations to operate according to the received control information, thereby achieving automated operation of a radio and television transmitting system. Preferably the respective base stations can return operating statuses of the base stations to the radio and television transmitting center through mobile communication terminals, so that the radio and television transmitting center can determine transmission delays and transmission powers at which the respective base stations transmit radio and television signals according to the operating statuses of the respective base stations, and the respective cellular base stations can adjust the transmission delays and the transmission powers under the control of the radio and television transmitting center, so that the respective cellular base station can operate in a synchronous transmission and improve transmission coverage efficiencies of the base stations.

### Brief Description of the Drawings

Fig.1 is a flow chart of a method for transmitting radio and television signals from a radio and television transmitting center according to a first embodiment of the invention;

Fig.2 is a flow chart of a method for transmitting radio and television signals from a radio and television transmitting center according to the first embodiment of the invention;

Fig.3 is a flow chart of a method for transmitting a radio and television signal from a base station according to a second embodiment of the invention;

Fig.4 is a flow chart of a method for transmitting a radio and television signal from a base station according to the second embodiment of the invention; and

Fig.5 is a schematic structural diagram of a system for transmitting radio and television signals according to an embodiment of the invention.

### Detailed Description of the Embodiments

In view of the problems of complex debugging, inefficient transmission coverage, etc., resulting from manual setting of transmission delays and transmission powers as typically required for transmission of radio and television signals from respective cellular base stations in an existing radio and television transmitting system, embodiments of the invention provide a radio and television transmitting system and method where a radio and television transmitting center can determine control information of respective base stations and transmit the control information to the respective base stations, which can control the base stations to operate according to the received control information, thereby achieving automated operation of the radio and television transmitting system. Preferably the respective base stations can return operating statuses to the radio and television transmitting center through mobile communication terminals, so that the radio and television transmitting center can determine transmission delays and transmission powers, at which the respective base stations transmit radio and television signals, according to the operating statuses of the respective base stations, and the respective base stations can adjust the transmission delays and the transmission powers under the control of the radio and television transmitting center, so that the respective base stations can operate in a synchronous transmission status and improve transmission coverage efficiencies of the base stations, thereby achieving automated operation and management of the radio and television transmitting system.

First Embodiment

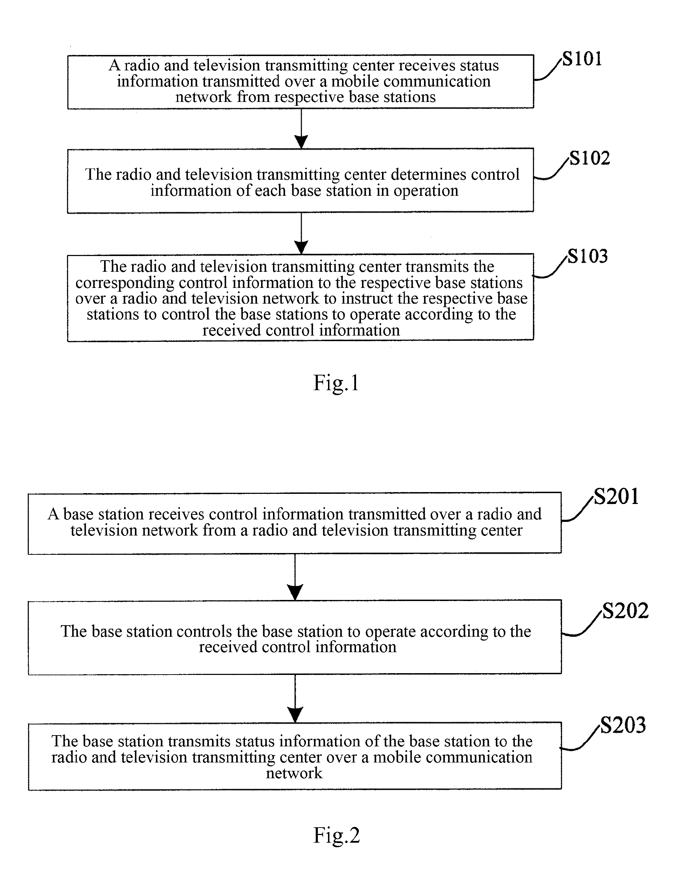

As illustrated in Fig.1, the first embodiment of the invention provides a method for transmitting radio and television signals from a radio and television transmitting center, and the method includes:

S101: A radio and television transmitting center receives status information transmitted over a mobile communication network from respective base stations;

Particularly the status information of the respective base stations can include parameter values of location coordinates of the base stations, i.e., geographical locations of the base stations, parameter values of path delays between the radio and television transmitting center and the base stations, and parameter values of operating statuses of the base stations, etc;

Particularly the parameter values of the location coordinates of the base stations can be transmitted from the base station to the radio and television transmitting center over the mobile communication network;

The parameter values of the path delays between the radio and television transmitting center and the base stations, i.e., periods for transmission of radio and television signals from the radio and television transmitting center to the base stations, can be derived by the respective base stations by calculating transmission times at the radio and television transmitting center of and reception times of arrival at the base stations of the radio and television signals, and specifically the radio and television transmitting center transmits the transmission times together with transmission control information or the radio and television signals, and the base stations determines the parameter values of the path delays between the radio and television transmitting center and the base stations according to the differences between the reception times and the transmission times;

The parameter values of the operating statuses of the base stations particularly refer to operating currents, transmission powers and operating voltages of the base stations, failure information of the base stations, etc.

S102: The radio and television transmitting center determines control information of each base station in operation;

The control information can include a transmission delay and a transmission power at which the base station transmits the radio and television signal as well as control information to control the base station to perform a self-test, where the control information to control a self-test of the base station can further include information to detect the location, the operating current, the operating voltage, etc., of the base station.

The radio and television transmitting center can determine the control information of each base station according to the status information of the base station. Of course, the radio and television transmitting center may not perform the step S101 but can determine directly the control information of each base station if the radio and television transmitting center has stored the status information of the base stations.

If the control information of the base station includes only the information to control a self-test of the base station, then the step S101 may not necessarily be performed but the base station can transmit directly the information to control a self-test of the base station to the radio and television transmitting center, and the base station can detect the status information of the base station upon reception of the self-test control information and return the status information of the base station to the radio and television transmitting center.

S103. The radio and television transmitting center transmits the corresponding control information to the respective base stations over a radio and television network to instruct the respective base stations to control the base stations to operate according to the received control information.

As illustrated in Fig.2, an embodiment of the invention further includes a method for transmitting a radio and television signal from a base station, and the method includes:

S201: A base station receives control information transmitted over a radio and television network from a radio and television transmitting center;

S202: The base station controls the base station to operate according to the received control information.

S203: The base station transmits status information of the base station to the radio and television transmitting center over a mobile communication network.

A method according to embodiments of the invention will be detailed below by way of an example in which a transmission time and a transmission power at which a base station transmits a radio and television signal is controlled.

Second Embodiment

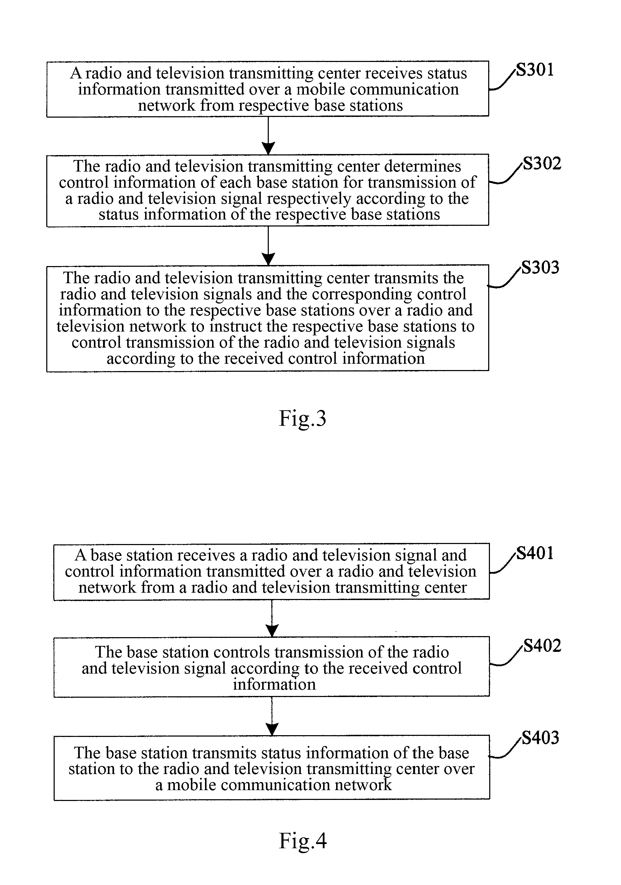

As illustrated in Fig.3, the second embodiment of the invention provides a method for transmitting radio and television signals, and the method includes:

S301: A radio and television transmitting center receives status information transmitted over a mobile communication network from respective base stations;

S302: The radio and television transmitting center determines control information of each base station for transmission of a radio and television signal respectively according to the status information of the respective base stations; and

S303: The radio and television transmitting center transmits the radio and television signals and the corresponding control information to the respective base stations over a radio and television network to instruct the respective base stations to control transmission of the radio and television signals according to the received control information.

The control information in the above step S302 particularly falls into the following three scenarios:

1) The status information of the base station includes parameter values of path delays between the radio and television transmitting center and the base stations, and then the control information of each base station includes a parameter value of a transmission delay at which the base station transmits the radio and television signal;

Furthermore the control information of each base station for transmission of the radio and television signal is determined respectively according to the status information of the respective base stations particularly as follows: the maximum parameter value of the path delay among the parameter values of the path delays of the respective base stations is determined; and the parameter value of the transmission delay at which each base station transmits the radio and television signal is determined as the difference between the maximum parameter value of the path delay and the parameter value of the path delay of the present base station.

For example, the parameter value of the path delay of the base station 1 is 127µs, the parameter value of the path delay of the base station 2 is 105µs, and the parameter value of the path delay of the base station 3 is 120µs, and then a computer unit of the radio and television transmitting center can determine the transmission delays of the respective base stations according to data of the maximum path delay among the respective base stations in order to ensure synchronous transmission of the radio and television signals from the respective base stations, that is, the radio and television transmitting center determines the transmission delay of the base station 1 as 0µs, the transmission delay of the base station 2 as 22µs and the transmission delay of the base station 3 as 7µs, and then the respective base stations can adjust the transmission delays of the radio and television signals by the parameter values of the transmission delays upon reception of the radio and television signals so that the respective base station transmit synchronously the radio and television signals. Of course, the transmission delay of the base station 1 is typically not set to 0µs in practical transmission in view of a practical condition. However an underlying principle lies in that the parameter value of the transmission delay of each base station is determined from the difference between the maximum parameter value of the path delay among the parameters value of the path delays of the respective base stations and the parameter value of the path delay of the each base station to ensure that the respective base stations can transmit synchronously the radio and television signals.

2) The use of the control information of the transmission delays above can only have the respective base stations transmit the radio and television signals in rough synchronization, but in a practical application, the base stations have their own location latitudes, topographical locations around the respective base stations, etc., and respective reception points in coherent areas with equal field-intensity signals of the respective base stations and their adjacent base stations shall receive the radio and television signals concurrently for the purpose of optimal synchronization. Thus the control information of the delays of the respective base stations shall be determined from the parameter values of the path delays of the respective base stations in combination with the distances from the respective base stations to the intersections of the coherent areas with equal field-intensity signals of the respective base stations and their adjacent base stations, and to this end, there is provided in this embodiment another preferred method as described below of determining control information of a transmission delay.

The status information of the base station includes parameter values of path delays between the radio and television transmitting center and the base stations, parameter values of location coordinates of the base stations and parameter values of operating statuses of the base stations, and then the control information of each base station includes a parameter value of a transmission delay at which the base station transmits the radio and television signal;

Furthermore the control information of each base station for transmission of the radio and television signal is determined respectively according to the status information of the respective base stations particularly as follows: a) the distances from the respective base stations to the intersections of the coherent areas with equal field-intensity signals of the respective base stations and their adjacent base stations are determined from the parameter values of the location coordinates and the parameter values of the operating statuses of the respective base stations and geographical information data and weather data stored in the radio and television transmitting center; and b) the parameter value of the transmission delay of each base station is determined from the parameters values of the path delays of the respective base stations and the distances from the respective base stations to the intersections.

A specific method for determining the distances from the respective base stations to the intersections of the coherent areas with equal field-intensity signals of the respective base stations and their adjacent base stations and method for determining a parameter value of a transmission delay here will be well known to those skilled in the art, and a detailed description thereof will be omitted here.

Thus the respective reception points in the coherent areas with equal field-intensity signals of the respective base stations and their adjacent base stations can receive the radio and television signals concurrently so that the respective base station can transmit the radio and television signals in optimal synchronization.

3) The control information in both of the foregoing scenarios is to control the transmission delays of the respective base stations, but the control information can further include controlling transmission powers at which the base stations transmit the radio and television signals. Specifically:

Moreover the status information of the base stations includes parameter values of path delays between the radio and television transmitting center and the base stations, parameter values of location coordinates of the base stations and parameter values of operating statuses of the base stations, and then the control information of each base station includes a parameter value of a transmission power at which the base station transmits the radio and television signal;

Furthermore the control information of each base station for transmission of the radio and television signal is determined respectively according to the status information of the respective base stations particularly as follows: the parameter values of the transmission powers of the respective base stations are determined from the parameter values of the location coordinates and the parameter values of the operating statuses of the respective base stations and geographical information data and weather data stored in the radio and television transmitting center.

For example, when a specific base station among the base station 1, the base station 2 and the base station 3 changes its operating status, for example, the base station 2 fails, failure information of the base station 2 will be returned to the radio and television transmitting center in data of the operating status of the base station over the mobile communication network, and a computer unit of the radio and television transmitting center will perform a calculation process and transmit power control information to the base station 1 and the base station 3 to increase the transmission powers of station 1 and the base station 3, so that an original coverage area of the failing base station 2 can be covered by the signals, thereby achieving full automation of operation and management of the system.

For a method for determining the transmission powers of the respective base stations, a method for determining a transmission power at which a base station transmits a radio and television signal as well known to those skilled in the art can also be adopted, and a repeated description thereof will be omitted here.

Correspondingly as illustrated in Fig.4, an embodiment of the invention further provides a method for transmitting a radio and television signal from a base station, and the method includes

S401: A base station receives a radio and television signal and control information transmitted over a radio and television network from a radio and television transmitting center;

S402: The base station controls transmission of the radio and television signal according to the received control information;

Specifically the base station controls a transmission delay of the radio and television signal according to a received parameter value of the transmission delay, and the base station controls a transmission power of a video signal according to a received parameter value of a power delay.

S403: The base station transmits status information of the base station to the radio and television transmitting center over a mobile communication network.

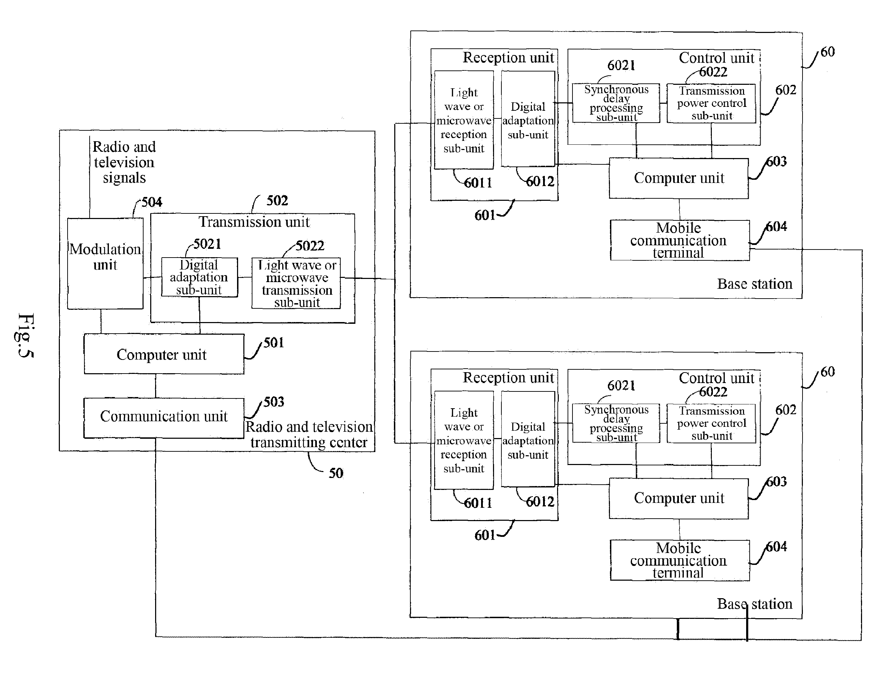

An embodiment of the invention further provides a radio and television transmitting system as illustrated in Fig.5, and the system includes:

A radio and television transmitting center 50 configured to determine control information to control each base station to operate and to transmit the corresponding control information to the respective base stations over a radio and television network to instruct the respective base stations to control the base stations to operate according to the received control information; and

The base stations 60 configured to receive the control information transmitted over the radio and television network from the radio and television transmitting center and to control the base stations to operate according to the received control information.

Preferably the radio and television transmitting center 50 is further configured to receive status information transmitted over a mobile communication network from the respective base stations; and

The base stations 60 are further configured to transmit the status information of the base stations to the radio and television transmitting center over the mobile communication network.

Particularly the radio and television transmitting center 50 particularly includes:

A computer unit 501 configured to determine the control information to control each base station to operate; and

A transmission unit 502 configured to transmit the corresponding control information to the respective base stations over the radio and television network to instruct the respective base stations to control the base stations to operate according to the received control information.

Preferably the radio and television transmitting center 50 further includes:

A communication gateway 503 configured to receive the status information transmitted over the mobile communication network from the respective base stations and transmit the status information to the computer unit 501.

Specifically:

The computer unit 501 is configured to determine the control information of each base station for transmission of the radio and television signal respectively according to the status information of the respective base stations;

Particularly when the status information of the base stations includes parameter values of path delays between the radio and television transmitting center and the base stations, the control information of each base station includes a parameter value of a transmission delay at which the base station transmits the radio and television signal; and the computer unit 501 is configured to determine the parameter value of the transmission delay of each base station according to the parameter values of the path delays of the respective base stations.

When the status information of the base stations includes parameter values of path delays between the radio and television transmitting center and the base stations, parameter values of location coordinates of the base stations and parameter values of operating statuses of the base stations, the control information of each base station generated by the computer unit 501 includes a parameter value of a transmission delay at which the base station transmits the radio and television signal; and the computer unit 501 is configured to determine the distances from the respective base stations to the intersections of coherent areas with equal field-intensity signals of the respective base stations and their adjacent base stations according to the parameter values of the location coordinates and the parameter values of the operating statuses of the respective base stations and stored geographical information data and weather data and to determine the parameter value of the transmission delay of each base station according to the parameter values of the path delays of the respective base stations and the distances from the respective base stations to the intersections.

When the status information of the base stations includes parameter values of path delays between the radio and television transmitting center and the base stations, parameter values of location coordinates of the base stations and parameter values of operating statuses of the base stations, the control information of each base station generated by the computer unit 501 includes a parameter value of a transmission power at which the base station transmits the radio and television signal; and the computer unit 501 is configured to determine the parameter value of the transmission powers of the respective base stations according to the parameter values of the location coordinates and the parameter values of the operating statuses of the respective base stations and stored geographical information data and weather data.

The transmission unit 502 is configured to transmit the radio and television signals and the corresponding control information to the respective base stations over the radio and television network to instruct the respective base stations to control transmission of the radio and television signals according to the received control information;

Particularly the transmission unit 502 can particularly include a digital adaptation sub-unit 5021 and a light wave or microwave transmission unit 5022, where the digital adaptation sub-unit 5021 is configured to convert the control information and the radio and television signals into digital signals in compliance with a communication protocol format of a transmission carrier, and the light wave or microwave transmission unit 5022 is configured to convert the digital signals into light waves or microwaves for transmission to reception units of the respective base stations.

Particularly the radio and television transmitting center 50 further includes:

A modulation unit 504 configured to modulate the radio and television signals and to transmit the modulated radio and television signals to the transmission unit 502;

Particularly the radio and television signals can be in one or more groups, and if the radio and television signals are in a plurality of groups, then the plurality of groups of radio and television signals are modulated respectively by a plurality of modulation units 504 into a plurality of branches of modulated radio and television signals.

The base stations 60 each particularly include:

A reception unit 601 configured to receive the control information transmitted over the radio and television network from the radio and television transmitting center;

Particularly the reception unit 601 is further configured to receive the radio and television signal and the control information transmitted over the radio and television network from the radio and television transmitting center.

The control unit 602 is configured to control the base station to operate according to the received control information;

Particularly the control unit 602 is configured to control transmission of the radio and television signal according to the received control signal.

Preferably the base stations 60 each further include:

A computer unit 602 configured to transmit the status information of the base station to the radio and television transmitting center over the mobile communication network;

Particularly the computer unit 603 can generate a control instruction from the control information received by the reception unit and transmit the control instruction to the control unit 602, and the control unit controls transmission of the radio and television signal in response to the control instruction.

Particularly the reception unit 601 can include a light wave or microwave reception sub-unit 6011 and a digital adaptation sub-unit 6012, where the light wave or microwave reception sub-unit 6011 is configured to receive and convert a light wave or a microwave into a digital signal, and the digital adaptation sub-unit 6012 is configured to recover the digital signal into the radio and television signal and the control information and to transmit the radio and television signal to the control unit and the control information to the computer unit 603.

Particularly the computer unit 603 can be connected with a mobile communication terminal 604 and transmit the status information of the base station to the mobile terminal 604, and the mobile terminal 604 returns the status information of the base station to the communication gateway of the radio and television transmitting center over the mobile communication network.

Of course, the status information of the respective base stations can be transmitted from the computer units 603 of the base stations to the computer unit 501 of the radio and television transmitting center for storage when the base stations are deployed, and subsequently the computer units 603 of the base stations may return the changed status information of the base stations to the computer unit 501 of the radio and television transmitting center for update only if the status information is changed; and of course, the computer units 603 of the base stations can alternatively return the status information of the base stations periodically to the computer unit 501 of the radio and television transmitting center for update, or the computer units 603 of the base stations can return the status information of the base stations to the computer unit 501 of the radio and television transmitting center each time the base stations receive the modulated radio and television signals and control information.

Particularly the control unit 602 is configured to control and transmit the radio and television signal in response to the control instruction.

The control unit 602 is configured to control a delay of the radio and television signal in response to a delay control instruction and to control a power of the modulated signal in response to a power control instruction;

Particularly the control unit 602 particularly includes: a synchronous delay processing sub-unit 6021 configured to control the delay of the radio and television signal in response to the delay control instruction; and a transmission power control processing sub-unit 6022 configured to control the power of the radio and television signal in response to the power control instruction.

Specific reference can be made to the embodiments of the method for specific implementations of the radio and television transmitting system and the base station and radio and television transmitting center therein according to the embodiments of the invention, and a repeated description thereof will be omitted here.

With the method and system for transmitting radio and television signals according to the embodiments of the invention, the radio and television transmitting center can determine control information of respective base stations and transmit the control information to the respective base stations, and the base stations can control the base stations to operate according to the received control information, thereby achieving automated operation of the radio and television transmitting system. Preferably the respective base stations can return operating statuses of the base stations to the radio and television transmitting center through mobile communication terminals, so that the radio and television transmitting center can determine transmission delays and transmission powers at which the respective base stations transmit radio and television signals according to the operating statuses of the respective base stations, and the respective cellular base stations can adjust the transmission delays and the transmission powers under the control of the radio and television transmitting center, so that the respective cellular base station can operate in a synchronous transmission and improve transmission coverage efficiencies of the base stations, where no human participation will be involved throughout the processing flow, thereby achieving automated operation and management of the radio and television transmitting system.

Those skilled in the art shall appreciate that the embodiments of the invention can be embodied as a method, a system or a computer program product. Therefore the invention can be embodied in the form of an all-hardware embodiment, an all-software embodiment or an embodiment of software and hardware in combination. Furthermore the invention can be embodied in the form of a computer program product embodied in one or more computer useable storage mediums (including but not limited to a disk memory, a CD-ROM, an optical memory, etc.) in which computer useable program codes are contained.

The invention has been described in a flow chart and/or a block diagram of the method, the device (system) and the computer program product according to the embodiments of the invention. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational steps are performed on the computer or the other programmable data processing device to create a computer implemented process so that the instructions executed on the computer or the other programmable device provide steps for performing the functions specified in the flow(s) of the flow chart and/or the block(s) of the block diagram.

Although the preferred embodiments of the invention have been described, those skilled in the art benefiting from the underlying inventive concept can make additional modifications and variations to these embodiments. Therefore the appended claims are intended to be construed as encompassing the preferred embodiments and all the modifications and variations coming into the scope of the invention.

Evidently those skilled in the art can make various modifications and variations to the invention without departing from the spirit and scope of the invention. Thus the invention is also intended to encompass these modifications and variations thereto so long as the modifications and variations come into the scope of the claims appended to the invention and their equivalents.

## Claims

1. A method for transmitting radio and television signals, comprising:
determining, by a radio and television transmitting center, control information to control each base station to operate; and
transmitting the corresponding control information to the respective base stations over a radio and television network to instruct the respective base stations to control the base stations to operate according to the received control information.

2. The method of claim 1, wherein before the radio and television transmitting center determines control information to control each base station to operate, the method further comprises:
the radio and television transmitting center receiving status information transmitted over a mobile communication network from the respective base stations.

3. The method of claim 2, wherein determining, by the radio and television transmitting center, control information to control each base station to operate comprises:
determining, by the radio and television transmitting center, the control information of each base station for transmission of the radio and television signal respectively according to the status information of the respective base stations; and
the transmitting the corresponding control information to the respective base stations over a radio and television network to instruct the respective base stations to control the base stations to operate according to the received control information comprises:
transmitting the radio and television signals and the corresponding control information to the respective base stations over the radio and television network to instruct the respective base stations to control transmission of the radio and television signal according to the received control information.

4. The method of claim 3, wherein the status information includes parameter values of path delays between the radio and television transmitting center and the base stations; and
the control information of each base station includes a parameter value of a transmission delay at which the base station transmits the radio and television signal.

5. The method of claim 4, wherein determining the control information of each base station for transmission of the radio and television signal respectively according to the status information of the respective base stations comprises:
determining the maximum parameter value of the path delay among the parameter values of the path delays of the respective base stations; and
determining the parameter value of the transmission delay at which each base station transmits the radio and television signal as the difference between the maximum parameter value of the path delay and the parameter value of the path delay of the present base station.

6. The method of claim 3, wherein the status information includes parameter values of path delays between the radio and television transmitting center and the base stations, parameter values of location coordinates of the base stations and parameter values of operating statuses of the base stations; and
the control information of each base station includes a parameter value of a transmission delay at which the base station transmits the radio and television signal.

7. The method of claim 6, wherein determining the control information of each base station for transmission of the radio and television signal respectively according to the status information of the respective base stations comprises:
determining the distances from the respective base stations to the intersections of coherent areas with equal field-intensity signals of the respective base stations and their adjacent base stations according to the parameter values of the location coordinates and the parameter values of the operating statuses of the respective base stations and geographical information data and weather data stored in the radio and television transmitting center; and
determining the parameter value of the transmission delay of each base station according to the parameter values of the path delays of respective base stations and the distances from the base stations to the intersections.

8. The method of claim 3, wherein the status information includes parameter values of path delays between the radio and television transmitting center and the base stations, parameter values of location coordinates of the base stations and parameter values of operating statuses of the base stations; and
the control information of each base station includes a parameter value of a transmission power at which the base station transmits the radio and television signal.

9. A method for transmitting a radio and television signal, comprising:
receiving, by a base station, control information transmitted over a radio and television network from a radio and television transmitting center; and
controlling the base station to operate according to the received control information.

10. The method of claim 9, further comprising:
transmitting, by the base station, status information of the base station to the radio and television transmitting center over a mobile communication network.

11. The method of claim 10, wherein receiving, by the base station, control information transmitted over a radio and television network from a radio and television transmitting center comprises:
receiving, by the base station, a radio and television signal and the control information transmitted over the radio and television network from the radio and television transmitting center; and
the controlling the base station to operate according to the received control information comprises:
controlling transmission of the radio and television signal according to the received control information.

12. The method of claim 11, wherein the status information includes a parameter value of a path delay between the radio and television transmitting center and the base station, and
the control information includes a parameter value of a transmission delay at which the base station transmits the radio and television signal; and
the controlling transmission of the radio and television signal according to the received control information comprises: controlling, by the base station, the transmission delay of the radio and television signal according to the received parameter value of the transmission delay.

13. The method of claim 11, wherein the status information includes a parameter value of a path delay between the radio and television transmitting center and the base station, parameter values of location coordinates of the base station and a parameter value of an operating status of the base station, and
the control information includes a parameter value of a transmission delay at which the base station transmits the radio and television signal; and
the controlling transmission of the radio and television signal according to the received control information comprises: controlling, by the base station, the transmission delay of the radio and television signal according to the received parameter value of the transmission delay.

14. The method of claim 11, wherein the status information includes a parameter value of a path delay between the radio and television transmitting center and the base station, parameter values of location coordinates of the base station and a parameter value of an operating status of the base station, and
the control information includes a parameter value of a transmission power at which the base station transmits the radio and television signal; and
the controlling transmission of the radio and television signal according to the received control information comprises: controlling, by the base station, the transmission power of the radio and television signal according to the received parameter value of the transmission power.

15. A radio and television transmitting center, comprising:
a computer unit configured to determine control information to control each base station to operate; and
a transmission unit configured to transmit the corresponding control information to the respective base stations over a radio and television network to instruct the respective base stations to control the base stations to operate according to the received control information.

16. The radio and television transmitting center of claim 15, further comprising:
a communication gateway configured to receive and transmit, to the computer unit, status information transmitted over a mobile communication network from the respective base stations.

17. The radio and television transmitting center of claim 16, wherein the computer unit is further configured to determine the control information of each base station for transmission of a radio and television signal respectively according to the status information of the respective base stations; and
the transmission unit is further configured to transmit the radio and television signals and the corresponding control information to the respective base stations over the radio and television network to instruct the respective base stations to control transmission of the radio and television signals according to the received control information.

18. The radio and television transmitting center of claim 17, wherein the status information received by the communication gateway includes parameter values of path delays between the radio and television transmitting center and the base stations; and
the control information of each base station determined by the computer unit includes a parameter value of a transmission delay at which the base station transmits the radio and television signal.

19. The radio and television transmitting center of claim 18, wherein the computer unit is configured to determine the maximum parameter value of the path delay among the parameter values of the path delays of the respective base stations and to determine the parameter value of the transmission delay at which each base station transmits the radio and television signal as the difference between the maximum parameter value of the path delay and the parameter value of the path delay of the base station.

20. The radio and television transmitting center of claim 17, wherein the status information received by the communication gateway includes parameter values of path delays between the radio and television transmitting center and the base stations, parameter values of location coordinates of the base stations and parameter values of operating statuses of the base stations; and
the control information of each base station determined by the computer unit includes a parameter value of a transmission delay at which the base station transmits the radio and television signal.

21. The radio and television transmitting center of claim 20, wherein the computer unit is configured to determine the distances from the respective base stations to the intersections of coherent areas with equal field-intensity signals of the respective base stations and their adjacent base stations according to the parameter values of the location coordinates and the parameter values of the operating statuses of the respective base stations and stored geographical information data and weather data and to determine the parameter value of the transmission delay of each base station according to the parameter values of the path delays of respective base stations and the distances from the respective base stations to the intersections.

22. The radio and television transmitting center of claim 17, wherein the status information received by the communication gateway includes parameter values of path delays between the radio and television transmitting center and the base stations, parameter values of location coordinates of the base stations and parameter values of operating statuses of the base stations; and
the control information of each base station determined by the computer unit includes a parameter value of a transmission power at which the base station transmits the radio and television signal.

23. A base station, comprising:
a reception unit configure to receive control information transmitted over a radio and television network from a radio and television transmitting center; and
a control unit configured to control the base station to operate according to the received control information.

24. The base station of claim 23, further comprising:
a computer unit configured to transmit status information of the base station to the radio and television transmitting center over a mobile communication network.

25. The base station of claim 24, wherein the reception unit is configured to receive a radio and television signal and the control information transmitted over the radio and television network from the radio and television transmitting center; and
the control unit is configured to control transmission of the radio and television signal according to the received control signal.

26. The base station of claim 25, wherein the status information transmitted from the computer unit includes a parameter value of a path delay between the radio and television transmitting center and the base station, and
the control information received by the reception unit includes a parameter value of a transmission delay at which the base station transmits the radio and television signal; and
the control unit is configured to control the transmission delay of the radio and television signal according to the received parameter value of the transmission delay.

27. The base station of claim 25, wherein the status information transmitted from the computer unit includes a parameter value of a path delay between the radio and television transmitting center and the base station, parameter values of location coordinates of the base station and a parameter value of an operating status of the base station, and
the control information received by the reception unit includes a parameter value of a transmission delay at which the base station transmits the radio and television signal; and
the control unit is configured to control the transmission delay of the radio and television signal according to the received parameter value of the transmission delay.

28. The base station of claim 25, wherein the status information transmitted from the computer unit includes a parameter value of a path delay between the radio and television transmitting center and the base station, parameter values of location coordinates of the base station and a parameter value of an operating status of the base station, and
the control information received by the reception unit includes a parameter value of a transmission power at which the base station transmits the radio and television signal; and
the control unit is configured to control the transmission power of the radio and television signal according to the received parameter value of the transmission power.

29. A system for transmitting radio and television signals, comprising a radio and television transmitting center and base stations, wherein:
the radio and television transmitting center is configured to determine control information to control each base station to operate and to transmit the corresponding control information to the respective base stations over a radio and television network to instruct the respective base stations to control the base stations to operate according to the received control information; and
the base stations are configured to receive the control information transmitted over the radio and television network from the radio and television transmitting center and to control the base stations to operate according to the received control information.

30. The transmitting system of claim 29, wherein the radio and television transmitting center is further configured to receive status information transmitted over a mobile communication network from the respective base stations; and
the base stations are further configured to transmit the status information of the base stations to the radio and television transmitting center over the mobile communication network.
